# FASCICULE DE BREVET EUROPEEN

(11) **EP 4 214 403 B1**
(45) Date de publication et mention de la délivrance du brevet: **14.08.2024**
(21) Numéro de dépôt: 21782783.1
(22) Date de dépôt: 08.09.2021
(51) Int. Cl.: F01D 9/04, F02C 7/32

(54) **RACCORDEMENT ELECTRIQUE D'UNE MACHINE ELECTRIQUE DANS UNE TURBOMACHINE D'AERONEF**
ELEKTRISCHE VERBINDUNG EINER ELEKTRISCHEN MASCHINE IN EINEM FLUGZEUGTURBINENTRIEBWERK
ELECTRICAL CONNECTION OF AN ELECTRICAL MACHINE IN AN AIRCRAFT TURBINE ENGINE

(30) Priorité: 18.09.2020 FR 2009494
(43) Date de publication de la demande: 26.07.2023
(73) Titulaire: SAFRAN AIRCRAFT ENGINES, 75015 Paris (FR)
(72) Inventeur: MILLIER, Vincent François Georges, 77550 MOISSY-CRAMAYEL (FR); GUILLOTEL, Loïc Paul Yves, 77550 MOISSY-CRAMAYEL (FR)
(74) Mandataire: Gevers & Orès
(86) Numéro de dépôt international: PCT/FR2021/051537
(87) Numéro de publication internationale: WO 2022/058672

(56) Documents cités:
- EP-A1- 3 246 528
- EP-A2- 1 939 406

## Description

### Domaine technique de l'invention

La présente invention concerne une turbomachine d'aéronef équipée d'une machine électrique ainsi qu'un procédé de maintenance de cette turbomachine.

### Arrière-plan technique

L'état de l'art comprend notamment les documents FR-A1-2 842 565, FR-A1-2 896 537, FR-A1-2 922 265 et EP-A1-3 246 528 qui décrivent des turbomachines équipées de machines électriques.

Le monde aéronautique se pose aujourd'hui de nombreuses questions quant à la pertinence d'utiliser des moteurs hybrides pour l'aviation commerciale. L'utilisation de l'énergie électrique est aujourd'hui envisagée non seulement pour répondre à des fonctions de l'aéronef mais également pour électrifier des fonctions de la turbomachine.

Ce constat conduit à étudier des solutions d'architecture moteur hybridée, combinant l'énergie fossile du carburant et l'énergie électrique pour assurer l'entraînement de la partie propulsive (soufflante de la turbomachine) et l'alimentation de certaines fonctions moteurs et/ou aéronef.

Ces architectures peuvent notamment se baser sur une architecture de type à grand taux de dilution et à réducteur, mais aussi à multiple corps (2 ou 3). Dans ces architectures, la turbomachine comprend un corps basse pression et un corps haute pression, chaque corps comportant un arbre reliant un rotor d'un compresseur à un rotor d'une turbine.

Il est connu d'équiper une turbomachine d'aéronef avec une machine électrique. On rappelle qu'une machine électrique est un dispositif électromécanique basé sur l'électromagnétisme permettant la conversion d'énergie électrique par exemple en travail ou énergie mécanique. Ce processus est réversible et peut servir à produire de l'électricité.

Ainsi, suivant l'usage final d'une machine, on utilise les termes de :
- générateur pour désigner une machine électrique produisant de l'énergie électrique à partir d'une énergie mécanique,
- moteur pour une machine électrique produisant une énergie mécanique à partir d'une énergie électrique.

Une machine électrique peut également se comporter en mode moteur comme en mode générateur.

L'intégration d'une machine électrique de forte puissance sur le corps basse pression d'une turbomachine, en particulier de type à grand taux de dilution, s'avère très complexe. Plusieurs zones d'installation sont possibles mais les avantages et les inconvénients de chacune sont nombreux et divers (problème d'intégration mécanique de la machine, tenue en température de la machine, accessibilité de la machine, etc.).

Une solution à ce problème consisterait à intégrer la machine électrique directement en aval de la soufflante de la turbomachine. Cependant, une difficulté serait le raccordement de cette machine au circuit électronique de puissance qui est en général situé à distance de la machine.

L'utilisation de harnais de puissance poserait quelques problèmes techniques dans cet environnement. Les harnais à fort diamètre ont des rayons de cintrage très importants, ce qui ne serait pas compatible avec cet environnement. L'intégration de harnais nécessiterait des supports afin de limiter la transmission de vibrations aux pièces environnantes et leur endommagement.

La présente invention propose une solution à au moins une partie des problèmes évoqués dans ce qui précède.

### Résumé de l'invention

L'invention propose une turbomachine d'aéronef, comportant :
- un générateur de gaz ayant un axe longitudinal,
- une soufflante située à une extrémité amont du générateur de gaz et configurée pour tourner autour dudit axe, et
- une machine électrique de forme générale annulaire qui est montée coaxialement en aval de la soufflante, et qui comprend un rotor couplé en rotation à la soufflante et un stator,

la soufflante étant configurée pour générer un flux principal de gaz dont une partie s'écoule dans une veine annulaire primaire du générateur de gaz pour former un flux primaire, et dont une autre partie s'écoule autour du générateur de gaz pour former un flux secondaire,
la veine primaire étant délimitée par une première et une deuxième enveloppes annulaires coaxiales du générateur de gaz, la veine primaire étant traversée par des bras, appelés IGV, de liaison des première et deuxième enveloppes, ainsi que par des bras tubulaires d'un carter d'entrée situé en aval des IGV,
le générateur de gaz comportant une troisième enveloppe annulaire qui entoure coaxialement la deuxième enveloppe, les deuxième et troisième enveloppes étant reliées ensemble à leurs extrémités amont pour former un bec annulaire de séparation des flux primaire et secondaire,
le stator de la machine électrique étant relié à un circuit électronique de puissance par au moins une barre électroconductrice qui s'étend sensiblement radialement par rapport audit axe à l'intérieur d'un des IGV, caractérisée en ce que lesdites première et deuxième enveloppes sont sectorisées, chacun des secteurs de la première enveloppe étant reliée par des IGV à un des secteurs de la deuxième enveloppe, pour former des segments angulaires aubagés, seulement une partie de ces segments comportant un IGV traversé par ladite au moins une barre qui est reliée rigidement à ce IGV et à ce segment et qui est configurée pour être démontée et retirée de la turbomachine par démontage et retrait de ce segment.

La présente invention propose ainsi une solution d'intégration d'une machine électrique, un premier avantage étant lié au fait que dans la zone d'intégration de cette machine, idéalement directement en aval de la soufflante et donc en amont du ou des compresseurs, les températures qui y règnent sont relativement faibles et donc optimales pour cette machine. Le rotor de la machine est entraîné par la soufflante et est donc à une vitesse relativement faible en particulier si la turbomachine comporte un réducteur. De plus, la machine est située au plus près des veines d'écoulement des flux et a un diamètre relativement important et peut ainsi produire des puissances importantes par rapport aux machines des technologies antérieures.

Par ailleurs, la présente invention apporte une solution au problème de raccordement électrique de la machine dans cet environnement. Ce raccordement est assuré par une ou plusieurs barres qui cheminent chacune à travers un IGV, c'est-à-dire au plus près du bec de séparation des flux primaire et secondaire de la turbomachine.

La barre et le segment aubagé sont destinés à être démontés et retirés ensemble, et sont donc solidarisés l'un à l'autre et indémontables l'un par rapport à l'autre, ce qui apporte plusieurs avantages :
- la sectorisation des enveloppes a pour avantage d'isoler la fonction de transmission de l'énergie électrique de la machine vers le circuit électronique de puissance ; l'opérateur a le choix d'utiliser un segment comportant un IGV traversé par une barre, et qui peut être considéré comme un segment « conducteur » (ou électroconducteur), ou un segment comportant des IGV sans barre et peut être considéré comme un segment classique ;
- la barre est de préférence totalement intégrée à un IGV et profilée de manière à s'intégrer au mieux dans la partie aérodynamique de l'aubage, ce qui réduit considérablement son maître-couple ;
- l'intégration de la barre dans un IGV permet en outre une rigidité significative du IGV se traduisant par une baisse des risques de vibrations dues à une trop grande souplesse ; la barre n'a pas besoin de maintien spécifique dans le IGV.

### J

La turbomachine selon l'invention peut comprendre une ou plusieurs des caractéristiques suivantes, prises isolément les unes des autres ou en combinaison les unes avec les autres :
- la barre traverse sans jeu le IGV,
- la barre comprend une âme électroconductrice entourée par une gaine isolante, la gaine isolante étant noyée dans un matériau du IGV,
- le IGV traversé par la barre est plein, son matériau s'étendant sans discontinuité depuis la gaine jusqu'à des faces externes aérodynamiques du IGV,
- la gaine s'étend radialement vers l'extérieur au-delà de la deuxième enveloppe et à distance d'une extrémité libre de la barre pour laisser libre cette extrémité, et radialement vers l'intérieur au-delà de la première enveloppe et à distance d'une extrémité libre opposée de la barre pour laisser libre cette extrémité,
- la troisième enveloppe est sectorisée et comprend des secteurs qui sont fixées de manière amovible sur la deuxième enveloppe, chacun des segments étant associé à un secteur de cette troisième enveloppe,
   -- la barre a une forme générale en L, lesdites première et seconde parties étant sensiblement rectilignes et reliées entre elles par une jonction située directement en aval dudit bec de séparation ;
   -- la barre a une section polygonale et constante, et peut être vrillée ;
   -- la turbomachine comprend un carter de nacelle qui entoure le générateur de gaz, ainsi que des aubages, appelés OGV, de liaison du carter de nacelle à ladite troisième enveloppe annulaire ;
   -- le carter de nacelle définit une veine secondaire d'écoulement du flux secondaire autour du générateur de gaz ;
   -- les bas OGV sont situés en aval des IGV et sensiblement au droit des bras tubulaires du carter d'entrée ;
   -- ladite seconde partie s'étend sensiblement au droit d'un des OGV ;
   -- le générateur de gaz comprend des brides annulaires de fixation des OGV qui sont situées entre lesdites deuxième et troisième enveloppes et qui comprennent des encoches de passage de ladite seconde partie de la barre ;
- la barre comprend une extrémité radialement interne de fixation amovible à un élément de raccordement électrique audit stator, et une extrémité radialement externe de fixation amovible à un harnais de raccordement électrique audit circuit ;
   -- la machine électrique est située en amont dudit bec de séparation ;
   -- le stator de la machine électrique est reliée au circuit électronique de puissance par plusieurs barres électroconductrices régulièrement réparties autour dudit axe ;
- le ou chaque IGV traversé par la barre est surdimensionné par rapport aux autres IGV ;
   -- ledit circuit de puissance est situé entre les deuxième et troisième enveloppes ; ledit harnais a une âme dont la section est identique à la section d'un corps de la barre ;
   -- la section de la barre, et en particulier de son corps, est constante sur toute la longueur de la barre ; et
   -- la barre est rigide ;
   -- la barre est souple et flexible et s'apparente à un tronçon de harnais ou de câble électrique.

La présente invention concerne également un segment angulaire aubagé pour une turbomachine telle que décrite ci-dessus, ce segment comportant :
- un secteur de première enveloppe annulaire,
- un secteur de deuxième enveloppe annulaire,
- au moins un IGV qui s'étend entre ces secteurs et qui les relie entre eux,
- une barre électroconductrice, de préférence rigide, qui traverse le IGV ou l'un des IGV et qui est indémontable vis-à-vis de ce IGV et du segment.

La présente invention concerne encore un procédé de maintenance d'une turbomachine telle que décrite ci-dessus, comprenant les étapes consistant à:
a) démonter et retirer au moins une partie de la troisième enveloppe, en particulier au niveau de ladite barre, et
b) démonter et retirer un segment solidaire d'une barre.

Le procédé selon l'invention peut comprendre une ou plusieurs des étapes suivantes, prises isolément les unes des autres ou en combinaison les unes avec les autres :
- pendant les étapes a) et b), maintien en place des aubages, appelés OGV, de liaison d'un carter de nacelle à ladite troisième enveloppe annulaire,
- entre les étapes a) et b), dissocier la barre d'au moins un harnais de raccordement électrique,
- après l'étape b), retrait d'un harnais de raccordement électrique, ce harnais s'étendant parallèlement audit axe longitudinal et étant retiré par translation axiale vers l'aval à travers des aménagements d'un des bras tubulaires du carter d'entrée.

### Brève description des figures

L'invention sera mieux comprise et d'autres détails, caractéristiques et avantages de l'invention apparaîtront à la lecture de la description suivante faite à titre d'exemple non limitatif en référence aux dessins annexés, dans lesquels :
[Fig.1] la figure 1 est une vue schématique en coupe axiale d'une turbomachine d'aéronef à fort taux de dilution et réducteur ;
[Fig.2] la figure 2 est une demi vue schématique partielle en coupe axiale d'une turbomachine d'aéronef selon l'invention équipée d'une machine électrique ;
[Fig.3] la figure 3 est similaire à la figure 2 et montre une barre de raccordement électrique d'un stator de la machine à un circuit électronique de puissance,
[Fig.4] la figure 4 est une vue schématique en perspective d'une partie de la turbomachine de la figure 3 et montre notamment des IGV dont un est traversé par une barre de raccordement électrique,
[Fig.5] la figure 5 est une autre vue schématique en perspective d'une partie de la turbomachine de la figure 3 et montre notamment le cheminement de la barre de raccordement électrique,
[Fig.6] la figure 6 est une vue schématique en perspective et avec arrachement partiel d'une partie de la turbomachine de la figure 3 et montre notamment les IGV dont un sert au passage de la barre de raccordement électrique,
[Fig.7a-7d] les figures 7a à 7d sont des vues d'un détail de la figure 3 et illustrent des étapes d'un procédé de maintenance de la turbomachine, [Fig.8] la figure 8 est une vue schématique en coupe transversale d'un harnais électrique, et
[Fig.9] la figure 9 est une vue schématique en coupe transversale d'un mode de réalisation d'une barre de raccordement électrique.

### Description détaillée de l'invention

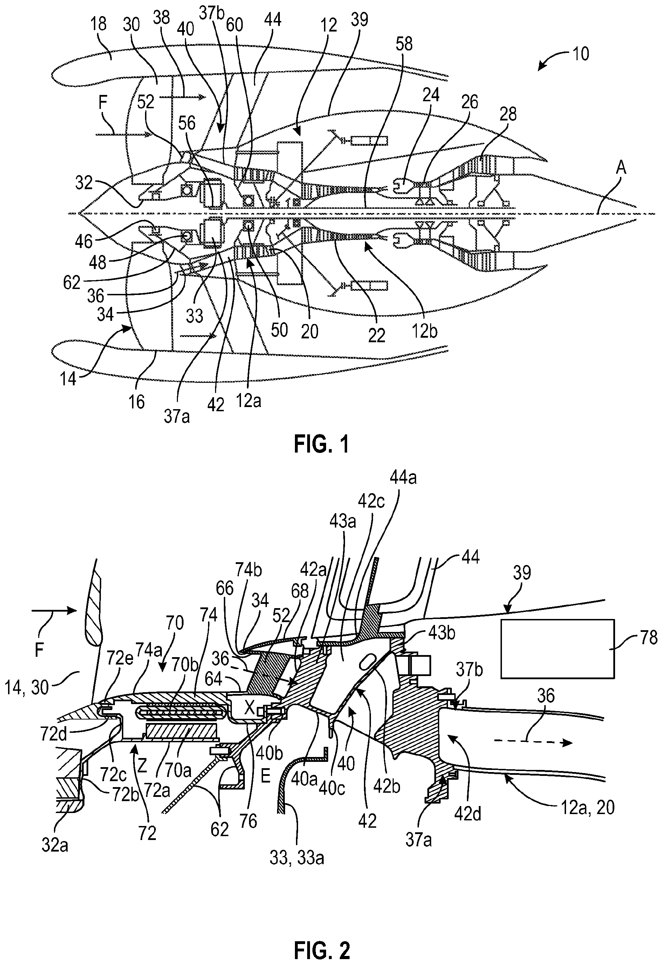

On se réfère d'abord à la figure 1 qui représente schématiquement une turbomachine 10 d'aéronef à double corps et double flux.

La turbomachine 10 comporte de façon classique un générateur de gaz 12 à l'amont duquel est disposée une soufflante 14. La soufflante 14 est entourée par un carter 16 qui est entouré par une nacelle 18 qui s'étend autour et le long d'une majeure partie du générateur de gaz 12.

Le générateur de gaz 12 comprend ici deux corps, à savoir un corps basse pression 12a ou BP et un corps haute pression 12b ou HP. Chaque corps comprend un compresseur et une turbine.

Les termes « amont » et « aval » sont considérés selon une direction principale F d'écoulement des gaz dans la turbomachine 10, cette direction F étant parallèle à l'axe longitudinal A de la turbomachine.

De l'amont vers l'aval, le générateur de gaz 12 comprend un compresseur basse pression 20, un compresseur haute pression 22, une chambre de combustion 24, une turbine haute pression 26 et une turbine basse pression 28.

La soufflante 14 comprend une rangée annulaire d'aubes 30 entraînée en rotation par un arbre de soufflante 32 qui est relié au rotor du corps basse pression 12a par l'intermédiaire d'un réducteur 33. Le flux de gaz qui traverse la soufflante (flèche F) est séparé à l'amont du générateur de gaz 12 par un bec annulaire 34 en un flux annulaire radialement interne, appelé flux primaire 36 qui s'écoule dans une veine annulaire primaire du générateur de gaz 12, et en un flux annulaire radialement externe, appelé flux secondaire 38 qui s'écoule dans une veine annulaire secondaire entre le générateur de gaz 12 et la nacelle 18 et fournit la majeure partie de la poussée de la turbomachine.

Un carter d'entrée 40 relie structurellement le générateur de gaz 12 au carter 16 et à la nacelle 18. Le carter d'entrée 40 comprend une rangée annulaire de bras 42 radialement internes s'étendant dans la veine d'écoulement du flux primaire 36, et une rangée annulaire d'aubages redresseurs 44, appelés OGV (acronyme de *Outer Gear Vane),* radialement externes s'étendant dans la veine d'écoulement du flux secondaire 38.

Les bras 42 sont en général en nombre limités (moins de dix) et sont tubulaires et traversés par des servitudes. Ces bras 42 ont un rôle structural car ils permettent la transmission d'efforts entre les supports paliers et les suspensions. Ils ont également un rôle de passage des servitudes, permettant de faire traverser les servitudes à travers la veine en les carénant, limitant ainsi les pertes aérodynamiques dans la veine. Ces bras n'ont pas de fonction de redressement de flux car ils n'ont pas de cambrure et ne sont pas en nombre suffisant pour réaliser cette fonction.

Le nombre d'aubages redresseurs 44 (OGV) est en général supérieur à dix. Ils permettent de redresser le flux de la soufflante grâce à un nombre et une cambrure spécifiques. Ils ont également une fonction structurante car ils supportent le carter autour de la soufflante (carter de soufflante).

La veine d'écoulement du flux primaire 36 est en outre traversée par d'autres aubages redresseurs 52, appelés IGV (acronyme de *Inner Gear Vane).* Les IGV 52 sont régulièrement répartis autour de l'axe A et sont situés en amont du carter d'entrée 40 et plus exactement en amont des bras 42. Ces aubages permettent de redresser le flux provenant de la soufflante 14 à son entrée dans la veine primaire. Ils n'ont pas de rôle structural. Ils sont en nombre suffisant (par exemple supérieur à 10) et avec une certaine cambrure pour redresser le flux de la soufflante pénétrant dans la veine primaire.

La veine d'écoulement du flux primaire 36 est délimitée par deux enveloppes annulaires coaxiales, respectivement interne 37a et externe 37b. Les IGV 52 et les bras 42, notamment, sont reliés à ces enveloppes 37a, 37b. La veine d'écoulement du flux secondaire 38 est délimitée intérieurement par une enveloppe annulaire 39 coaxiale aux enveloppes 37a, 37b, et extérieurement par le carter de nacelle 16. Les OGV 44 sont reliés aux enveloppes 37b, 39. Chacune des enveloppes 37a, 37b, 39 peut être formée par plusieurs parois ou capots adjacents.

Le rotor du corps basse pression 12a ainsi que l'arbre de soufflante 32 sont guidés à l'amont par des paliers 46, 48 et 50. Ces paliers 46, 48, 50 sont du type à billes ou à rouleaux et comprennent chacun une bague interne montée sur l'arbre à guider, une bague externe portée par un support annulaire de paliers et un roulement entre les bagues.

De façon connue, le réducteur 33 est du type à train épicycloïdal et comprend un solaire centré sur l'axe A, une couronne s'étendant autour de l'axe, et des satellites qui engrènent avec le solaire et la couronne et sont portés par un porte-satell ites.

Dans l'exemple représenté, la couronne est fixe et reliée fixement à un support 62 des paliers 46, 48. Le porte-satellites est tournant et accouplé à l'arbre de soufflante 32. Le solaire du réducteur est accouplé par un arbre d'entrée 56 à l'arbre principal 58 du corps basse pression.

L'arbre d'entrée 56 est guidé par le palier 50 qui est porté par un support de palier 60. L'arbre de soufflante 32 est guidé par les paliers 46, 48.

Les supports de paliers 60, 62 s'étendent autour de l'axe A et sont des pièces fixes reliées au stator et en particulier au carter d'entrée 40.

La figure 2 est une vue plus détaillée et à plus grande échelle d'une partie de la figure 1, et illustre un mode de réalisation d'une turbomachine 10 selon l'invention.

Les éléments de la figure 2 qui ont déjà été décrits en référence à la figure 1 sont désignés par les mêmes références.

La figure 2 montre notamment la zone Z située entre le disque de soufflante 32a et le réducteur 33, dans laquelle une machine électrique 70 est installée. Seul un support 33a de la couronne du réducteur 33 est visible à la figure 2, cet élément étant par exemple relié au carter d'entrée 40 ou au support de palier 62.

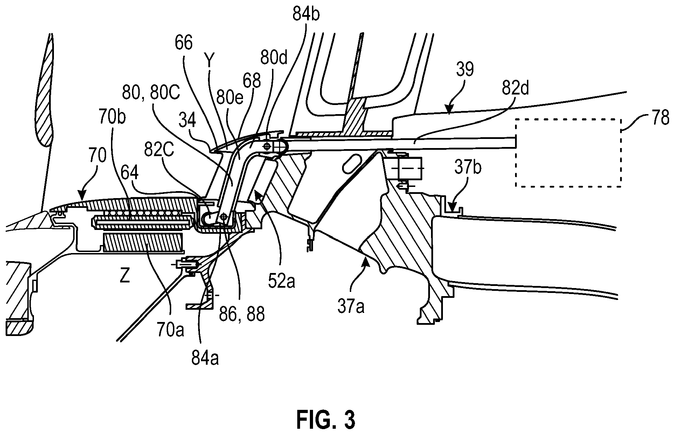

La coupe du dessin de la figure 2 passe par un des IGV 52 qui est plein. Comme cela sera décrit plus en détail dans ce qui suit, au moins un ou certains IGV 52 sont toutefois particuliers et sont désignés par la référence 52a. Un IGV 52a de ce type est visible en coupe à la figure 3.

La coupe passe par un OGV 44 ainsi que par un bras 42 qui est tubulaire pour le passage de servitudes, comme évoqué dans ce qui précède. Chaque bras 42 comprend à l'amont un bord 42a et à l'aval un bord 42d, respectivement d'attaque et de fuite du flux primaire 36.

Chaque bras 42 comprend une cavité interne 42c qui est fermée radialement à l'extérieur par une paroi 44a du OGV 44. Cette paroi 44a est formée d'une seule pièce avec le OGV 44 et est fixée sur des brides annulaires, respectivement amont 43a et aval 43b, du carter d'entrée 40. La cavité 42c est isolée des servitudes par la paroi 42b.

La cavité interne 42c de chaque bras 42 est fermée radialement à l'intérieur par une paroi annulaire 40a du carter d'entrée 40. A l'extrémité amont de cette paroi 40a, le carter d'entrée 40 comprend une bride annulaire 40b radialement interne de fixation du support de palier 62. A l'extrémité aval de la paroi 40a, le carter d'entrée 40 comprend une bride annulaire 40c radialement interne de fixation, par exemple à une gouttière annulaire de récupération d'huile projetée par le réducteur 33 par centrifugation.

Le réducteur 33 ainsi que les paliers 46, 48, 50 visibles à la figure 1 sont situés dans une enceinte annulaire de lubrification E qui est délimitée à l'amont par le support de palier 62 et au moins un joint d'étanchéité non visible, et à l'aval par le support de palier 60 et au moins un joint d'étanchéité non visible. La périphérie externe de l'enceinte E est fermée de manière étanche notamment par la paroi 40a.

La figure 2 permet de voir que l'enveloppe 37a évoquée dans ce qui précède est formée de plusieurs parois annulaires successives telles que la paroi 40a et une virole annulaire 64 située en amont de la paroi 40a et reliée à la périphérie interne des IGV 52, 52a.

L'enveloppe 37b est formée de plusieurs parois annulaires successives et notamment une virole annulaire 66 située en amont du carter d'entrée 40. Cette virole 66 s'étend autour de la virole 64 et est reliée à la périphérie externe des IGV 52, 52a.

L'enveloppe 39 est formée de plusieurs parois annulaires successives telles que la paroi 44a et une virole annulaire 68 située en amont de la paroi 44a. Cette virole 68 s'étend autour de la virole 66 et les extrémités amont des viroles 66, 68 sont reliées entre elles pour former le bec de séparation 34. Comme évoqué dans ce qui précède, la machine électrique 70 est située dans une zone annulaire Z, cette zone Z étant ici délimitée à l'amont par la soufflante 14, et en particulier le disque 32a de liaison des aubes de soufflante 30 à l'arbre de soufflante, et à l'aval par le support de palier 62. La machine 70 a une forme générale annulaire et comprend un rotor 70a et un stator 70b. Le rotor 70a a une forme générale annulaire s'étendant autour de l'axe A et est porté par un élément de support 72 qui a lui-même une forme générale annulaire.

Dans l'exemple représenté, l'élément de support 72 comprend une paroi cylindrique 72a entourée par le rotor 70a et fixée à la périphérie interne de ce dernier. L'extrémité amont de cette paroi 72a est reliée d'une part à une bride annulaire radialement interne 72b de fixation au disque de soufflante 32a, et d'autre part à un rebord annulaire externe 72c.

Le rebord 72c comprend une surface cylindrique interne 72d d'appui sur une surface cylindrique externe de la soufflante 14 afin d'assurer le centrage du rotor 70a. Le rebord 72c comprend en outre des léchettes annulaires externes 72e d'un joint d'étanchéité du type à labyrinthe.

Le stator 70b a également une forme générale annulaire et est porté par un élément annulaire de support 74.

L'élément 74 comprend une surface annulaire externe 74a qui définit intérieurement la veine d'écoulement du flux de gaz F, entre la soufflante 14 et le bec de séparation 34. L'élément 74 est fixé à la périphérie externe du stator 70b et comprend une extrémité amont qui coopère, par exemple par l'intermédiaire d'un revêtement annulaire abradable, avec les léchettes 72e précitées.

L'extrémité aval de l'élément 74 est alignée axialement avec la virole 64 dont un bord périphérique amont est engagé axialement dans une gorge annulaire 74b de l'élément 74. Cette gorge 74b est orientée axialement vers l'aval. L'engagement du bord amont de la virole 64 dans la gorge 74b de l'élément 74 assure un recouvrement et évite ainsi une marche dans la veine qui perturberait le flux F.

L'extrémité aval de l'élément 74 comprend en outre une bride annulaire 76 de fixation au support de palier 62 ou au carter d'entrée 40. Cette bride 76 a en section axiale une forme générale en U dont l'ouverture est orientée radialement vers l'extérieur. Cette bride 76 définit ainsi un espace annulaire X qui sert au raccordement électrique du stator 70b, comme cela sera décrit plus en détail dans ce qui suit en référence à la figure 3 notamment. Dans l'exemple représenté, la bride 76 est fixée par des vis à une bride du support de palier 62 et à la bride 40b du carter d'entrée.

L'élément 74 peut être formé d'une seule pièce, ou bien de deux pièces annulaires et coaxiales montées l'une autour de l'autre.

Une des particularités de cette installation réside dans le fait que la machine électrique 70 et en particulier son stator 70b est situé au plus près du flux principal F après traversée de la soufflante 14. Ceci permet d'une part de disposer d'une machine électrique à grand diamètre et donc à puissance potentielle supérieure aux technologies proposées jusqu'ici, et d'une machine qui est refroidie par le flux F. Avantageusement, les réjections thermiques de la machine électrique 70 sont dissipées grâce à ce refroid issement.

Pour cela, la surface 74a balayée par le flux F a de préférence un profil aérodynamique, comme représenté dans le dessin. L'élément 74 assure l'échange de calories par conduction thermique entre le stator 70b et le flux F.

Le stator 70b est relié par des moyens de raccordement électrique à un circuit électronique de puissance 78 qui est situé entre les deux enveloppes 37b, 39 et donc autour du générateur de gaz 12.

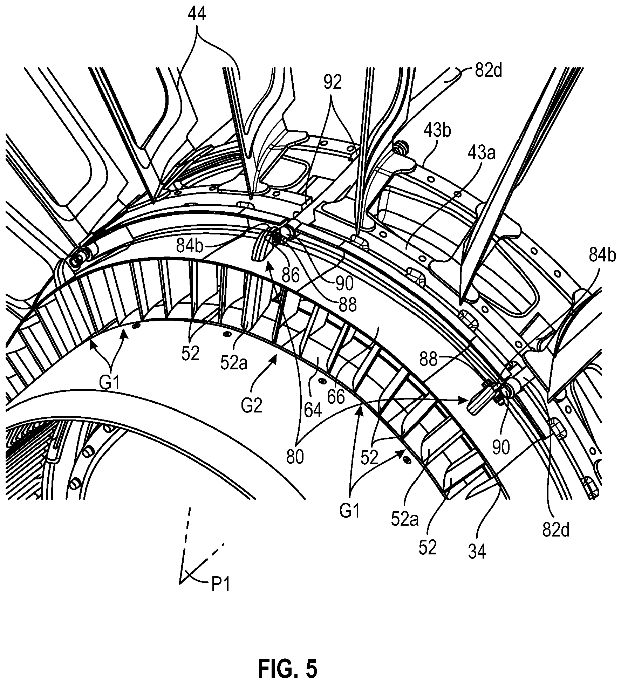

Les figures 3 à 7d illustrent un mode de réalisation de ces moyens de raccordement électrique qui incluent au moins une barre 80, de préférence rigide.

Bien qu'un ou plusieurs harnais électriques 82c, 82d puissent en outre être utilisés pour le raccordement électrique du stator 70b, au moins une barre 80 est utilisée, ce qui apporte de nombreux avantages.

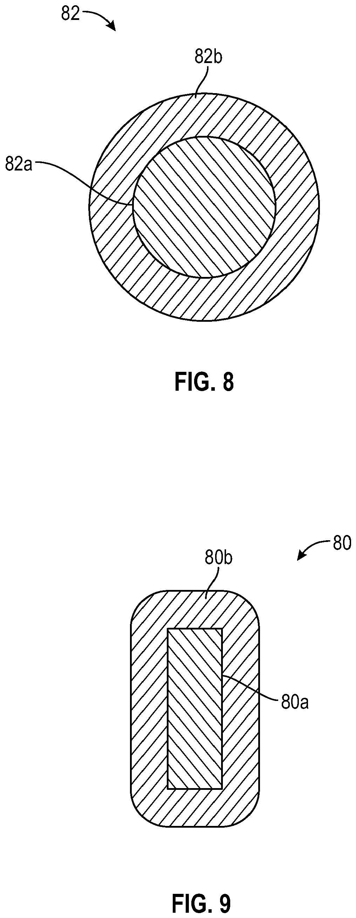

Dans un exemple préféré de réalisation de l'invention, le stator 70b est raccordé par un premier harnais électrique 82c à une extrémité de la barre 80 dont l'extrémité opposée est raccordée par un second harnais électrique 82d au circuit 78 (figure 3). Dans ce cas, la section de l'âme 82a de chaque harnais 82c, 82d est de préférence identique ou proche de la section du corps 80a de la barre 80 (figures 8 et 9). La section de la barre 80 et en particulier de son corps 80a est de préférence constante sur toute la longueur de la barre.

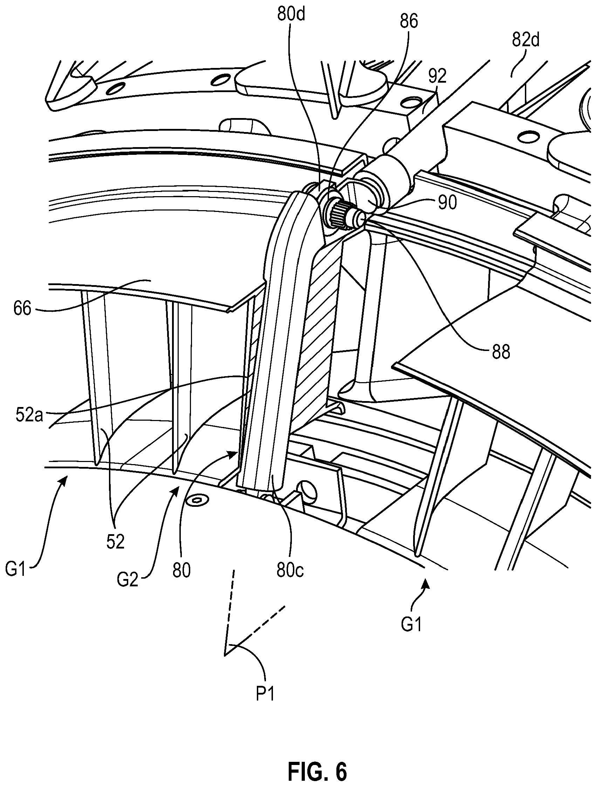

La barre 80, visible dans sa quasi intégralité à la figure 6, est conformée pour cheminer depuis la zone Z, et en particulier l'espace X, jusqu'à l'espace Y situé entre les enveloppes 37b, 39, juste en aval du bec 34 et radialement à l'intérieur de la virole 68.

La barre 80 peut avoir une forme générale complexe par exemple en L, S, Z, etc. Dans l'exemple représenté, elle s'étend dans un plan P1 passant par l'axe A et qui correspond au plan de coupe de la figure 3.

La barre 80 comprend une âme électroconductrice 80a entourée par une gaine 80b isolante (cf. figures 8 et 9).

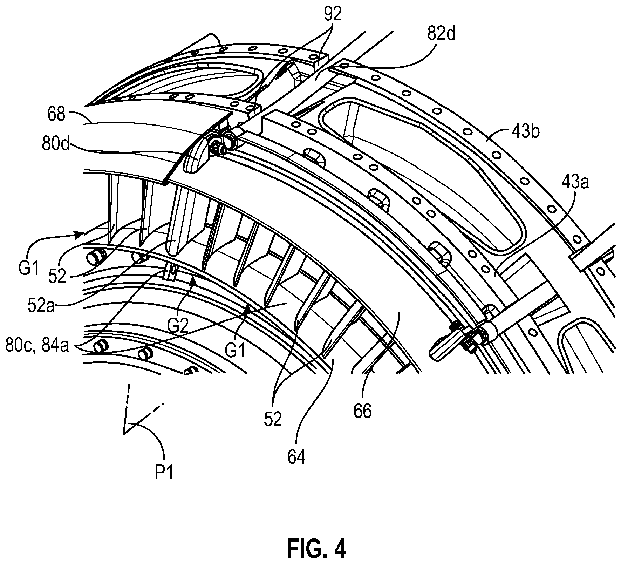

La barre 80 comprend des extrémités, respectivement amont 84a et aval 84b, qui sont mises à nue, c'est-à-dire qui ne sont pas recouvertes par une gaine 80b, afin de pouvoir raccorder la barre 80 aux harnais 82c, 82d (figures 4-6).

La gaine 80 s'étend radialement vers l'extérieur au-delà de la virole 66 et à distance d'une extrémité libre 84b de la barre pour laisser libre cette extrémité, et radialement vers l'intérieur au-delà de la virole 64 et à distance d'une extrémité libre 84a opposée de la barre pour laisser libre cette extrémité.

Chacune des extrémités 84a, 84b comprend un orifice 86 de montage d'un boulon 88 (vis et écrou, voire également rondelle). Ce boulon 88 sert à fixer une extrémité 84a, 84b de la barre 80 au harnais 82c, 82d correspondant, de préférence par l'intermédiaire d'une cosse 90. La cosse 90 est raccordée à une extrémité du harnais 82c, 82d et comprend une plaque destinée à être appliquée sur l'extrémité 84a, 84b correspondante et à y être serrée et fixée par l'intermédiaire du boulon 88 (figures 4-6).

L'invention propose un cheminement particulier de la barre 80 depuis l'espace X jusqu'à l'espace Y, et plus particulièrement entre les harnais 82c, 82d. A noter qu'en pratique, le stator 70b peut être relié par plusieurs barres 80 au circuit 78. Ces barres 80 sont alors de préférence régulièrement réparties autour de l'axe A et reliées chacune par des harnais 82c, 82d au stator 70b et au circuit 78. La description qui suite faite pour une barre 80 s'applique donc pour chaque barre 80 de raccordement électrique du stator 70b de la machine électrique 70 au circuit électronique de puissance 78. Dans le mode de réalisation représenté dans les dessins, la barre 80 chemine à travers un des IGV 52a.

Plus exactement, la barre 80 a une forme générale en L et comprend une première partie 80c s'étendant sensiblement radialement par rapport à l'axe A à l'intérieur du IGV 52, et une seconde partie 80d s'étendant sensiblement parallèlement à l'axe A entre les enveloppes 37b, 39, et juste en amont d'une des OGV 44.

Les parties 80c, 80d sont sensiblement rectilignes et reliées entre elles par une jonction 80e coudée située directement en aval du bec de séparation 34, entre les viroles 66, 68. Dans la mesure où, comme dans l'exemple représenté, le IGV 52 peut être incliné d'amont en aval vers l'extérieur, la première partie 80c peut avoir une inclinaison similaire.

La partie 80c est ici plus longue que la partie 80d.

La figure 3 permet de voir que l'extrémité 84a est située dans l'espace X précité et raccordée par le boulon 88 au harnais 82c dans cet espace X. On comprend donc que la barre 80 et en particulier sa partie 80c traverse les viroles 64, 66 en cheminant à travers le IGV 52a.

Une des particularités de l'invention réside dans le fait que chacune des enveloppes 37a, 37b est sectorisée au niveau des IGV 52, 52a. Les viroles 64, 66 sont donc sectorisées et chaque secteur de la virole 64 étant relié par un ou plusieurs IGV 52, 52a à un secteur de la virole 66.

Dans l'exemple représenté aux figures 4 à 6, chaque secteur de virole 64 est relié par 3 ou 4 IGV à un secteur de virole 66. L'ensemble formé par un secteur de virole 64, un secteur de virole 66 et des IGV forment un segment angulaire aubagé.

La turbomachine 10 comprend plusieurs segments répartis autour de l'axe A et disposés circonférentiellement bout à bout. Les segments sont de deux types. Le premier type de segment, noté G1, comprend uniquement des IGV 52 (ici au nombre de 4), alors que le second type de segment, noté G2, comprend un IGV 52a voire également des IGV 52 (au nombre de 2). On comprend donc que chaque segment G2 est en outre associé à une barre 80 qui traverse le IGV 52a.

Du fait de la différence du nombre de IGV entre les types de segments G1, G2, les segments peuvent avoir des dimensions différentes en direction circonférentielle. Les segments G1 ont ainsi une dimension circonférentielle supérieure à celle des segments G2 dans l'exemple représenté.

Une autre particularité de l'invention réside dans le fait que la barre 80 est indissociable ou indémontable de son segment G2 et inversement. Cela signifie que la barre 80 ne peut être démontée et retirée de la turbomachine qu'avec son segment G2.

La virole 68 est également sectorisée et comprend des secteurs qui sont fixés de manière amovible. Chacun des segments G1, G2 est associé à un secteur de virole 68.

La figure 6 notamment permet de constater que le matériau du IGV 52a est intimement lié à la barre 80 et recouvre sans jeu sa gaine 80b. La gaine 80b est ainsi noyée dans le matériau du IGV 52a. Le IGV 52a traversé par la barre 80 est donc plein dans la mesure où son matériau s'étend sans discontinuité depuis la gaine 80b jusqu'aux faces externes aérodynamiques du IGV, qui peuvent forme un intrados et un extrados respectivement.

Les figures 4 à 6 permettent de constater que chaque IGV 52a de passage de la barre 80 est surdimensionné. On comprend que le nombre de IGV 52a surdimensionnés dépendra du nombre de barres 80 de raccordement électrique de la machine 70 au circuit 78, chaque barre 80 traversant un de ces bras surdimensionnés.

Les figures 4 à 6 permettent de constater que la partie 80d de la barre 80 est alignée avec des encoches 92 des brides 43a, 43b. Il s'agit d'encoches axiales 92 formées à la périphérie externe des brides 43a, 43b de fixation du OGV 44 et conformées pour que le harnais 82d relié à la barre 80 puisse cheminer à travers ces encoches 92 sans gêner la fixation des OGV 44 sur les brides 43a, 43b. Les encoches 92 sont ainsi disposées de façon à ce que le harnais 82d chemine entre deux OGV 44 adjacents.

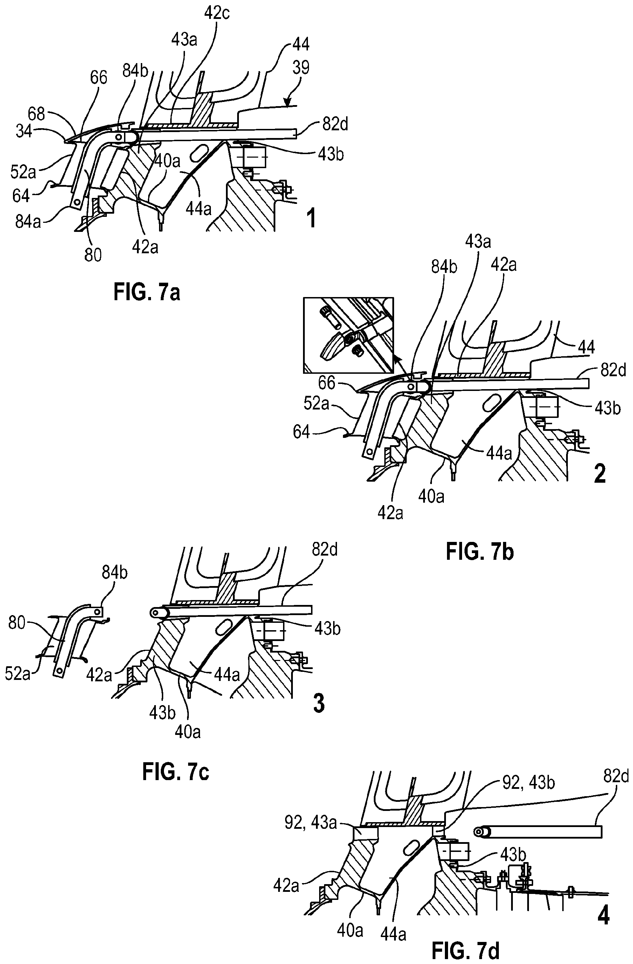

Les figures 7a à 7d illustrent des étapes d'un procédé de maintenance de la turbomachine 10.

Dans l'ordre représenté des étapes illustrées aux figures 7a à 7d, ces étapes permettent un démontage de la barre 80. On comprend qu'il suffit de répéter ces étapes dans l'ordre inverse pour réaliser un montage ou remontage de la barre 80.

A la première étape illustrée aux figures 7a et 7b, au moins une partie de la troisième enveloppe 39 est démontée et retirée, en particulier au niveau de la barre 80. Il s'agit donc de démonter et retirer un secteur de la virole 68 (figures 7a et 7b).

Une autre étape consiste alors à désolidariser les extrémités 84a, 84b de la barre 80, des harnais 82c, 82d. La barre 80 est alors démontée et peut être retirée avec son segment G2, comme illustrée aux figures 7b et 7c, par exemple par translation axiale vers l'amont.

Enfin, la figure 7d montre une dernière étape dans laquelle le harnais 82d qui n'est plus relié à la barre 80 est retiré par translation axiale vers l'aval, à travers les encoches 92 des bras 43a, 43b

La figure 8 montre une coupe d'un harnais électrique 82 qui a en général une forme générale circulaire et comprend une âme 82a conductrice formée par un toron de câbles et une gaine externe 82b isolante. La figure 9 montre un exemple de réalisation d'une barre 80, qui comprend un corps conducteur 80a ayant de préférence une forme polygonale et par exemple rectangulaire en section. La barre 80 comprend en outre une gaine externe 80b isolante. Certains avantages de l'invention ont été décrits dans ce qui précède. D'autres avantages de l'invention sont notamment :
- le cheminement de la barre est compatible de toutes les servitudes huile circulant dans les bras du carter d'entrée. De plus, les parois installées dans les bras du carter d'entrée isolent les barres des servitudes huiles, ce qui limiter les risques d'apparition d'un feu ;
- la modularité pensée pour optimiser/ faciliter le montage et démontage d'un segment « conducteur » sans démonter des OGV ;
- la barre 80 permet, à l'opposé d'un harnais, des rayons de cintrage très courts, ce qui, dans l'environnement concerné, est primordial ; ceci permet de limiter l'épaisseur du bec de séparation 34 à une épaisseur proche de celle de la barre 80 ;

- lorsque la barre 80 est rigide, il n'y a pas de risque de vibrations dues à une trop grande souplesse donc pas besoin de maintien spécifique dans les bras du carter d'entrée 40 ;
- le cheminement décrit plus haut est compatible de toutes les servitudes huile circulant dans les bras du carter d'entrée 40 ; de plus, les parois du carter d'entrée 40, et en particulier les parois 40a et 42b, isolent la barre 80 de ces servitudes huiles, ce qui limite le risque de feu ; et
- la modularité liée à la facilité de montage/démontage de la barre 80 en enlevant seulement un segment de la turbomachine.

Cette invention pourrait être appliquée à toute turbomachine équipée d'une machine électrique en amont d'un carter structural du type carter d'entrée ou autre.

## Revendications

1. Turbomachine (10) d'aéronef, comportant :
- un générateur de gaz (12) ayant un axe longitudinal (A),
- une soufflante (14) située à une extrémité amont du générateur de gaz et configurée pour tourner autour dudit axe, et
- une machine électrique (70) de forme générale annulaire qui est montée coaxialement en aval de la soufflante, et qui comprend un rotor (70a) couplé en rotation à la soufflante, et un stator (70b),
la soufflante étant configurée pour générer un flux principal de gaz (F) dont une partie s'écoule dans une veine annulaire primaire du générateur de gaz pour former un flux primaire (36), et dont une autre partie s'écoule autour du générateur de gaz pour former un flux secondaire (38),
la veine primaire étant délimitée par une première et une deuxième enveloppes annulaires (37a, 37b) coaxiales du générateur de gaz, la veine primaire étant traversée par des aubages, appelés IGV (52, 52a), de liaison des première et deuxième enveloppes, ainsi que par des bras tubulaires (42) d'un carter d'entrée situé en aval des IGV,
le générateur de gaz comportant une troisième enveloppe annulaire (39) qui entoure coaxialement la deuxième enveloppe, les deuxième et troisième enveloppes (37b, 39) étant reliées ensemble à leurs extrémités amont pour former un bec annulaire (34) de séparation des flux primaire et secondaire (36, 38),
le stator (70b) de la machine électrique (70) étant relié à un circuit électronique de puissance (78) par au moins une barre électroconductrice (80) qui s'étend sensiblement radialement par rapport audit axe à l'intérieur d'un des IGV (52a),
**caractérisée en ce que** lesdites première et deuxième enveloppes (37a, 37b) sont sectorisées, chacun des secteurs de la première enveloppe (37a) étant reliée par des IGV (52, 52a) à un des secteurs de la deuxième enveloppe (37b), pour former des segments angulaires aubagés (G1, G2), seulement une partie (G2) de ces segments comportant un IGV (52a) traversé par ladite au moins une barre (80) qui est reliée rigidement à ce IGV et à ce segment et qui est configurée pour être démontée et retirée de la turbomachine par démontage et retrait de ce segment.

2. Turbomachine (10) selon la revendication 1, dans laquelle la barre (80) traverse sans jeu le IGV (52a).

3. Turbomachine (10) selon la revendication précédente, dans laquelle la barre (80) comprend une âme (80a) électroconductrice entourée par une gaine (80b) isolante, la gaine isolante étant noyée dans un matériau du IGV.

4. Turbomachine (10) selon la revendication précédente, dans laquelle le IGV (52a) traversé par la barre (80) est plein, son matériau s'étendant sans discontinuité depuis la gaine (80b) jusqu'à des faces externes aérodynamiques du IGV.

5. Turbomachine (10) selon la revendication 3 ou 4, dans laquelle la gaine (80b) s'étend radialement vers l'extérieur au-delà de la deuxième enveloppe (37b) et à distance d'une extrémité libre (84b) de la barre (80) pour laisser libre cette extrémité, et radialement vers l'intérieur au-delà de la première enveloppe (37a) et à distance d'une extrémité libre (84a) opposée de la barre pour laisser libre cette extrémité.

6. Turbomachine (10) selon l'une des revendications précédentes, dans laquelle la troisième enveloppe (39) est sectorisée et comprend des secteurs qui sont fixées de manière amovible sur la deuxième enveloppe (37b), chacun des segments étant associé à un secteur de cette troisième enveloppe.

7. Turbomachine (10) selon l'une des revendications précédentes, dans laquelle la barre (80) comprend une extrémité (84a) radialement interne de fixation amovible à un élément de raccordement électrique audit stator (70b), et une extrémité (84b) radialement externe de fixation amovible à un harnais (82b) de raccordement électrique audit circuit (78).

8. Turbomachine (10) selon l'une des revendications précédentes, dans laquelle le ou chaque IGV (52a) traversé par une barre (80) est surdimensionné par rapport aux autres IGV (52).

9. Segment angulaire aubagé (G2) pour une turbomachine (10) selon l'une des revendications précédentes, ce segment comportant :
- un secteur de première enveloppe annulaire (37a, 64),
- un secteur de deuxième enveloppe annulaire (37b, 66),
- au moins un IGV (52, 52a) qui s'étend entre ces secteurs et qui les relie entre eux,
- une barre électroconductrice (80) qui traverse le IGV ou l'un des IGV et qui est indémontable vis-à-vis de ce IGV et du segment.

10. Procédé de maintenance d'une turbomachine (10) selon l'une des revendications 1 à 8, comprenant les étapes consistant à :
a) démonter et retirer au moins une partie de la troisième enveloppe (39), en particulier au niveau de ladite barre (80), et
b) démonter et retirer un segment (G2) solidaire d'une barre (80).

11. Procédé selon la revendication précédente, dans lequel il comprend une ou plusieurs des étapes suivantes :
- pendant les étapes a) et b), maintien en place des aubages, appelés OGV (44), de liaison d'un carter de nacelle (16) à ladite troisième enveloppe annulaire (39),
- entre les étapes a) et b), dissocier la barre (80) d'au moins un harnais de raccordement électrique (82c, 82d),
- après l'étape b), retrait d'un harnais de raccordement électrique (82d), ce harnais s'étendant parallèlement audit axe longitudinal (A) et étant retiré par translation axiale vers l'aval à travers des aménagements d'un des bras tubulaires (42) du carter d'entrée.

## Patentansprüche

1. Turbotriebwerk (10) eines Luftfahrzeugs, umfassend:
- einen Gasgenerator (12), mit einer Längsachse (A),
- ein Gebläse (14), das sich an einem dem Gasgenerator vorgelagerten Ende befindet und konfiguriert ist, um sich um die Achse herum zu drehen, und
- eine im Allgemeinen ringförmige elektrische Maschine (70), die zu dem Gebläse koaxial nachgelagert montiert ist und die einen Rotor (70a), der mit dem Gebläse drehgekoppelt ist, und einen Stator (70b) umfasst,
wobei das Gebläse konfiguriert ist, um einen Hauptgasfluss (F) zu generieren, von dem ein Teil in einen primären ringförmigen Strom des Gasgenerators fließt, um einen primären Fluss (36) zu bilden, und von dem ein anderer Teil um den Gasgenerator herum fließt, um einen sekundären Fluss (38) zu bilden,
wobei der primäre Strom durch eine erste und eine zweite koaxiale ringförmige Hülle (37a, 37b) des Gasgenerators begrenzt ist, wobei der primäre Strom von Schaufeln, genannt IGV (52), zur Verbindung der ersten und zweiten Hülle, sowie durch röhrenförmige Arme (42) eines Einlassgehäuses durchquert wird, das sich den IGV nachgelagert befindet,
wobei der Gasgenerator eine dritte ringförmige Hülle (39) aufweist, die die zweite Hülle koaxial umgibt, wobei die zweite und die dritte Hülle (37b, 39) zusammen an ihren vorgelagerten Enden zum Bilden einer ringförmigen Tülle (34) zur Trennung des primären und sekundären Flusses (36, 38) verbunden sind,
wobei der Stator (70b) der elektrischen Maschine (70) mit einem elektronischen Leistungsschaltkreis (78) durch mindestens eine elektrisch leitfähige Stange (80) verbunden ist, die sich im Wesentlichen radial in Bezug auf die Achse innerhalb einer der IGV (52a) erstreckt,
**dadurch gekennzeichnet, dass** die erste und die zweite Hülle (37a, 37b) sektorisiert sind, wobei jeder der Sektoren der ersten Hülle (37a) durch IGV (52, 52a) mit einem der Sektoren der zweiten Hülle (37b) verbunden ist, um winkelförmige, geschaufelte Segmente (G1, G2) zu bilden, wobei nur ein Teil (G2) dieser Segmente eine IGV (52a) aufweist, die von der mindestens eine Stange (80) durchquert wird, die starr mit dieser IGV und diesem Segment verbunden ist und die dazu konfiguriert ist, durch Demontage und Entfernen dieses Segments aus dem Turbotriebwerk demontiert und entfernt zu werden.

2. Turbotriebwerk (10) nach Anspruch 1, wobei die Stange (80) spielfrei die IGV (52a) durchquert.

3. Turbotriebwerk (10) nach dem vorstehenden Anspruch, wobei die Stange (80) einen elektrisch leitfähigen Kern (80a) umfasst, der von einem isolierenden Mantel (80b) umgeben ist, wobei der isolierende Mantel in ein Material der IGV eingebettet ist.

4. Turbotriebwerk (10) nach dem vorstehenden Anspruch, wobei die IGV (52a), die von der Stange (80) durchquert wird, massiv ist, wobei sich ihr Material ohne Unterbrechung von dem Mantel (80b) zu aerodynamischen Außenflächen der IGV erstreckt.

5. Turbotriebwerk (10) nach Anspruch 3 oder 4, wobei sich der Mantel (80b) radial nach außen über die zweite Hülle (37b) hinaus und in einem Abstand von einem freien Ende (84b) der Stange (80) erstreckt, um dieses Ende frei zu lassen, und radial nach innen über die erste Hülle (37a) hinaus und in einem Abstand von einem gegenüberliegenden freien Ende (84a) der Stange erstreckt, um dieses Ende frei zu lassen.

6. Turbotriebwerk (10) nach einem der vorstehenden Ansprüche, wobei die dritte Hülle (39) sektorisiert ist und Sektoren umfasst, die lösbar an der zweiten Hülle (37b) befestigt sind, wobei jedes der Segmente einem Sektor dieser dritten Hülle zugeordnet ist.

7. Turbotriebwerk (10) nach einem der vorstehenden Ansprüche, wobei die Stange (80) ein radial inneres Ende (84a) zur lösbaren Befestigung an einem elektrischen Verbindungselement mit dem Stator (70b) und ein radial äußeres Ende (84b) zur lösbaren Befestigung an einem Kabelbaum (82b) zur elektrischen Verbindung mit dem Leistungsschaltkreis (78) umfasst.

8. Turbotriebwerk (10) nach einem der vorstehenden Ansprüche, wobei die oder jede IGV (52a), die von einer Stange (80) durchquert wird, in Bezug auf die anderen IGV (52) überdimensioniert ist.

9. Beschaufeltes Winkelsegment (G2) für ein Turbotriebwerk (10) nach einem der vorstehenden Ansprüche, wobei das Segment umfasst:
- einen Sektor der ersten ringförmigen Hülle (37a, 64),
- einen Sektor einer zweiten ringförmigen Hülle (37b, 66),
- mindestens eine IGV (52, 52a), die sich zwischen diesen Sektoren erstreckt und sie miteinander verbindet,
- eine elektrisch leitfähige Stange (80), die die IGV oder eine der IGV durchquert und die gegenüber dieser IGV und dem Segment nicht demontierbar ist.

10. Verfahren zur Wartung eines Turbotriebwerks (10) nach einem der Ansprüche 1 bis 8, umfassend die Schritte, die darin bestehen:
a) Demontieren und Herausnehmen mindestens eines Teils der dritten Hülle (39), insbesondere auf Höhe der Stange (80), und
b) Demontieren und Herausnehmen eines Segments (G2), das fest mit einer Stange (80) verbunden ist.

11. Verfahren nach dem vorstehenden Anspruch, wobei es einen oder mehrere der folgenden Schritte umfasst:
- während der Schritte a) und b), Halten der Schaufeln, als OGV (44) bezeichnet, zur Verbindung eines Gondelgehäuses (16) mit der dritten ringförmigen Hülle (39) in Position,
- zwischen den Schritten a) und b), Trennen der Stange (80) von mindestens einem elektrischen Verbindungskabelbaum (82c, 82d),
- nach dem Schritt b), Entfernen eines elektrischen Verbindungskabelbaums (82d), wobei sich dieser Kabelbaum parallel zu der Längsachse (A) erstreckt und durch eine nachgelagert gerichtete axiale Translation durch Anordnungen eines der rohrförmigen Arme (42) des Eingangsgehäuses hindurch entfernt wird.

## Claims

1. An aircraft turbine engine (10), comprising:
- a gas generator (12) having a longitudinal axis (A),
- a fan (14) located at an upstream end of the gas generator and configured to rotate about said axis, and
- an electrical machine (70) of generally annular shape which is mounted coaxially downstream of the fan, and which comprises a rotor (70a) coupled in rotation to the fan, and a stator (70b),
the fan being configured to generate a main gas flow (F), a portion of which flows into a primary annular duct of the gas generator to form a primary flow (36), and another portion of which flows around the gas generator to form a secondary flow (38),
the primary duct being delimited by a first and a second annular envelopes (37a, 37b) coaxial with the gas generator, the primary duct being passed through by bladings, referred to as IGV (52, 52a), connecting the first and second envelopes, as well as by tubular arms (42) of an inlet casing located downstream of the IGV,
the gas generator comprising a third annular envelope (39) which coaxially surrounds the second envelope, the second and third envelopes (37b, 39) being connected together at their upstream ends to form an annular splitter nose (34) for separating the primary and secondary flows (36, 38),
the stator (70b) of the electrical machine (70) being connected to a power electronic circuit (78) by at least one electrically conductive bar (80) which extends substantially radially with respect to said axis inside one of the IGV (52a),
**characterised in that** said first and second envelopes (37a, 37b) are sectorised, each of the sectors of the first envelope (37a) being connected by IGV (52, 52a) to one of the sectors of the second envelope (37b), to form bladed angular segments (G1, G2), only a portion (G2) of these segments comprising an IGV (52a) passed through by said at least one bar (80) which is rigidly connected to that IGV and to that segment and which is configured to be disassembled and removed from the turbine engine by disassembly and removal of that segment.

2. The turbine engine (10) of claim 1, wherein the bar (80) passes through the IGV (52a) without clearance.

3. The turbine engine (10) according to the preceding claim, wherein the bar (80) comprises an electrically conductive core (80a) surrounded by an insulating sheath (80b), the insulating sheath being embedded in a material of the IGV.

4. The turbine engine (10) according to the preceding claim, wherein the IGV (52a) through which the bar (80) passes is solid, its material extending seamlessly from the sheath (80b) to aerodynamic external faces of the IGV.

5. The turbine engine (10) according to claim 3 or 4, wherein the sheath (80b) extends radially outwardly beyond the second envelope (37b) and away from a free end (84b) of the bar (80) to leave that end free, and radially inwardly beyond the first envelope (37a) and away from an opposite free end (84a) of the bar to leave that end free.

6. The turbine engine (10) according to any of the preceding claims, wherein the third envelope (39) is sectorised and comprises sectors which are releasably attached to the second envelope (37b), each of the segments being associated with a sector of that third envelope.

7. The turbine engine (10) according to any of the preceding claims, wherein the bar (80) comprises a radially internal end (84a) for releasably attaching to an element for electrically connecting to said stator (70b), and a radially external end (84b) for releasably attaching to a harness (82b) for electrically connecting to said circuit (78).

8. The turbine engine (10) according to any of the preceding claims, wherein the or each IGV (52a) through which a bar (80) passes is oversized relative to the other IGV (52).

9. A bladed angular segment (G2) for a turbine engine (10) according to one of the preceding claims, this segment comprising:
- a first annular envelope sector (37a, 64),
- a second annular envelope sector (37b, 66),
- at least one IGV (52, 52a) that extends between these sectors and connects them together,
- an electrically conductive bar (80) which passes through the IGV or one of the IGV and which is non-detachable from that IGV and the segment.

10. A method for maintaining a turbine engine (10) according to any of claims 1 to 8, comprising the steps consisting in:
a) disassembling and removing at least one portion of the third envelope (39), in particular at the level of said bar (80), and
b) disassembling and removing a segment (G2) secured to a bar (80).

11. The method according to the preceding claim, wherein it comprises one or more of the following steps:
- during the steps a) and b), maintaining in place the connection bladings, referred to as OGV (44), for connecting a nacelle casing (16) to said third annular envelope (39),
- between the steps a) and b), dissociating the bar (80) from at least one electrical connecting harness (82c, 82d),
- after the step b), removing an electrical connecting harness (82d), this harness extending parallel to said longitudinal axis (A) and being removed by axial translation towards downstream through arrangements of one of the tubular arms (42) of the inlet casing.
